Europäisches Patentamt

European Patent Office

Office européen des brevets

(19)

(11) Publication number: **0 160 319**

**A2**

(12) **EUROPEAN PATENT APPLICATION**

(21) Application number: **85105386.8**

(22) Date of filing: **03.05.85**

(51) Int. Cl.⁴: **F 16 D 3/40**

(30) Priority: **04.05.84 JP 88304/84**

(43) Date of publication of application:
**06.11.85 Bulletin 85/45**

(84) Designated Contracting States:
**CH DE FR GB IT LI NL SE**

(71) Applicant: **HITACHI, LTD.**
**6, Kanda Surugadai 4-chome Chiyoda-ku Tokyo 100(JP)**

(72) Inventor: **Yukita, Hisashi**
**522, Boda Apartment House 2593, Takaba Katsuta-shi(JP)**

(72) Inventor: **Kanamaru, Hisanobu**
**3449-7, Higashiishikawa Katsuta-shi(JP)**

(72) Inventor: **Sasaya, Kazushi**
**542, Boda Apartment House 2592-1, Takaba Katsuta-shi(JP)**

(74) Representative: **Patentanwälte Beetz sen. - Beetz jun. Timpe - Siegfried - Schmitt-Fumian Steinsdorfstrasse 10 D-8000 München 22(DE)**

(54) Universal joint.

(57) A universal joint has a cross spider (10) which is composed of a connecting piece (3) having bores (3a, 3b) orthogonally crossing at its center, and pivot shafts (4, 5, 6) received by the bores (3a 3b) and provided in the peripheral surfaces thereof with anchoring grooves (4b, 4c, 5b, 6b). The material of the connecting piece (3) is plastically deformed locally around the pivot shafts (4, 5, 6) received in the respective bores such as to fill the anchoring grooves (4b, 4c, 5b, 6b), thereby firmly fixing the pivot shafts (4, 5, 6) by compacting force and resistance against shearing.

FIG. I

EP 0 160 319 A2

**0160319**

UNIVERSAL JOINT

## 1 BACKGROUND OF THE INVENTION

The present invention relates to a universal joint and, more particularly, to a universal joint which is easy to assemble and which operates with high reliability.

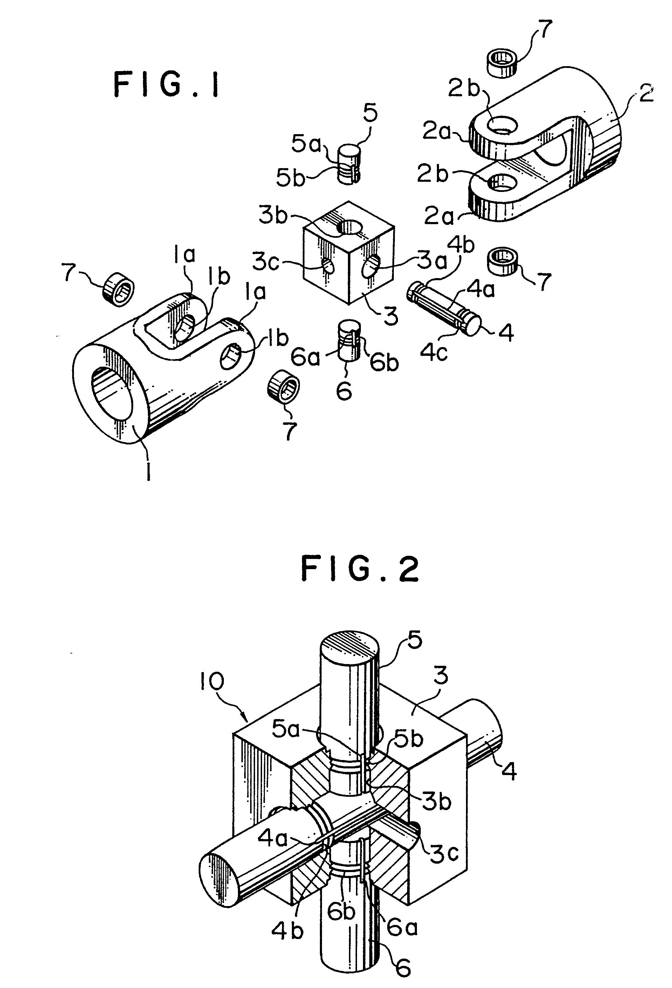

Cross-spider type universal joints have been used in various fields of technology. A typical example of this type of universal joint is shown in Fig. 1 of Japanese Utility Model Laid-Open No. 191427/1983.

This universal joint has a connecting piece disposed between the forks of a pair of joint barrels. The universal joint further has a first pivot shaft received in one of the bores formed in the connecting piece, and a second pivot shaft constituted by a pair of segments received by bores formed in the connecting piece at right angles to the first pivot shaft. The second pivot shaft is then caulked and fixed by means of a fixing pin extending through the center of the pivot shaft. From the view point of workability and productivity, however, it is almost impossible to finish these pieces with zero tolerance. In consequence, gaps are inevitably formed between the parts in the assembled state of the universal joint, and the gaps increase in size during long use of the joint thus allowing a certain degree of play in operation. For these reasons, the known universal joint cannot withstand vibration and, hence, cannot operate with sufficiently high reliability.

0160319

During the operation of the universal joint, centrifugal forces, as well as large torques, are applied to the pivot shaft segments, so that the pivot shaft segments have to be fixed by the fixing pin. In addition, it has been necessary to take suitable measures for preventing the rotation of the pivot shafts.

It might be possible to fix the orthogonal pivot shafts by an adhesive or by welding. With existing adhesives, however, it is almost impossible to obtain a sufficiently high bonding strength. On the other hand, the fixing of two pivot shafts by welding is extremely complicated and difficult because, in order to attain a compact construction, it is necessary to weld the pivot shafts after they are assembled together with the connecting piece. Under such a condition, it is quite difficult to uniformly weld the shafts and, hence, reliability is impaired.

On the other hand, the specification of United States Patent No. 3,930,381 discloses a universal joint which is designed for easier assembly and disassembly. This universal joint, however, is too complicated in construction and cannot ensure high reliability.

SUMMARY OF THE INVENTION

Accordingly, an object of the invention is to provide a universal joint which is easy to assemble and which can operate with high reliability.

To this end, according to the invention, a

0160319

universal joint of cross-spider type is provided, wherein the pivot shafts which are orthogonally inserted into the connecting piece can be fixed to each other while being held between a pair of joint barrels.

BRIEF DESCRIPTION OF THE DRAWINGS

The attached drawings show an embodiment of the universal joint in accordance with the invention in which:

Fig. 1 is an exploded perspective view of a universal joint in accordance with the invention;

Fig. 2 is a partly cut-away perspective view of a cross-spider;

Fig. 3 is a partly-sectioned side elevational view of the universal joint;

Fig. 4 is a sectional view taken along the line IV-IV of Fig. 3;

Fig. 5 is a partly-sectioned elevational view of the cross-spider shown in Fig. 2;

Figs. 6 and 7 are sectional views of essential parts of the universal joints, illustrating different steps of assembly; and

Fig. 8 is an enlarged view of an essential part of the universal joint.

DESCRIPTION OF THE PREFERRED EMBODIMENT

A preferred embodiment of the universal joint of the invention will be described hereinunder with reference to Figs. 1 to 5.

Referring first to Fig. 1 showing all parts of the joint in an exploded perspective view, a joint barrel assembly includes a first joint barrel 1 made of a metallic tubular member and having a fork 1a, and a second joint barrel 2 made of a metallic tubular member and having a fork 2a which meshes with the fork 1a of the first joint barrel 1. A connecting piece 3 made of a cubic metallic member is disposed between the forks 1a and 2a such that its four lateral sides are surrounded by the fingers of these forks 1a, 2a. The connection between the forks 1a, 2a and the connecting piece 3 is achieved through a first cylindrical pivot shaft 4 and a second cylindrical pivot shaft which is constituted by two pivot shaft segments 5, 6. More specifically, the first pivot shaft 4 is received in a bore 3a formed in the connecting piece 3, while the segments 5, 6 of the second pivot shaft are received in a bore 3b orthogonal to the bore 3a. The first and second pivot shafts fit in holes 1b, 2b in the fingers of the first and second joint barrels 1, 2, thus connecting the joint barrels 1 and 2 to the connecting piece 3, through metal bushes 7. The connecting piece 3 further has lubricating oil ports 3c formed orthogonally with respect to the bores 3a, 3b, such as to communicate with oil grooves 4a, 5a and 6a formed in the first and second pivot shafts 4 and 5, 6. These oil grooves are formed at 180° offset on each pivot shaft by, for example, a milling cutter.

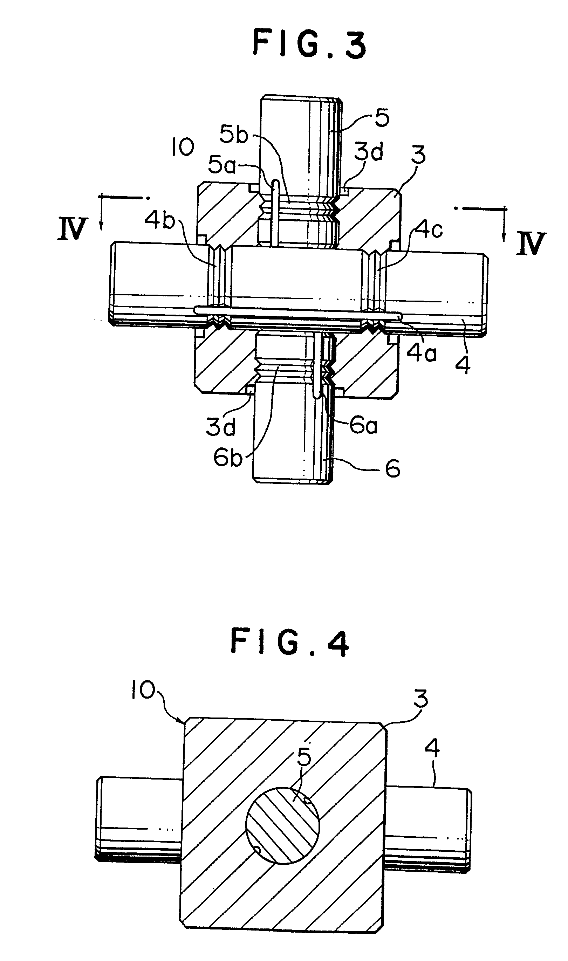

Figs. 2 to 5 in combination show the detail of the connection between the connecting piece 3 and the pivot shafts 4, 5, 6 constituting a cross-spider 10. The first pivot shaft 4 is made of a metallic material having a resistance which is at least the same as that of the connecting piece 3 and projects at its both ends beyond the connecting piece 3 by amounts equal to the thickness of the finger of the fork 1a. Similarly, the segments 5, 6 of the second pivot shaft project beyond the connecting piece 3 by amounts equal to the thickness of the fingers of the fork 2a. The segments 5, 6 are beforehand provided with W-shaped grooves in the peripheral surfaces thereof such as to provide anchoring double grooves 5b, 6b. These segments are inserted through the upper and lower openings of the bore 3b as viewed in Fig. 3 until the ends thereof contact the pivot shaft 4. In this state, the brims of the openings of the bore 3b are pressed by dies to cause a plastic deformation of the material of the connecting piece 3 such that the inner walls of the bore 3b firmly engage and grip the anchoring grooves 5b, 6b. In consequence, the surfaces of the connecting piece 3 are depressed as at 3d around the openings of the bore 3b. Similarly, the other pivot shaft 4 is provided with anchoring grooves 4b, 4c which are firmly engaged and gripped by the inner peripheral surface of the bore 3a as a result of pressing by dies to leave recesses 3e which communicate with the oil groove 4a.

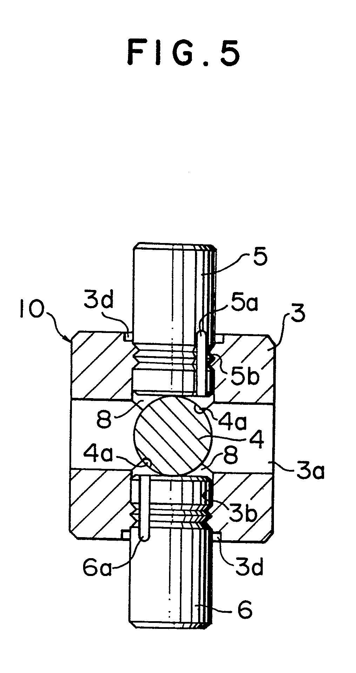

As will be clearly understood from Fig. 5, the pivot shaft segments 5, 6 have flat ends which make line contact with the pivot shaft 4 which extends horizontally, so that vacant spaces 8 are formed at the corners where both bores 3a and 3b meet each other. The aforementioned oil grooves 4a, 5a and 6a open to these vacant spaces so that they can without fail communicate with the lubricating oil ports 3c. The other or outlet ends of the oil grooves 4a, 5a and 6a commonly open to the recesses 3d, 3e formed by the dies.

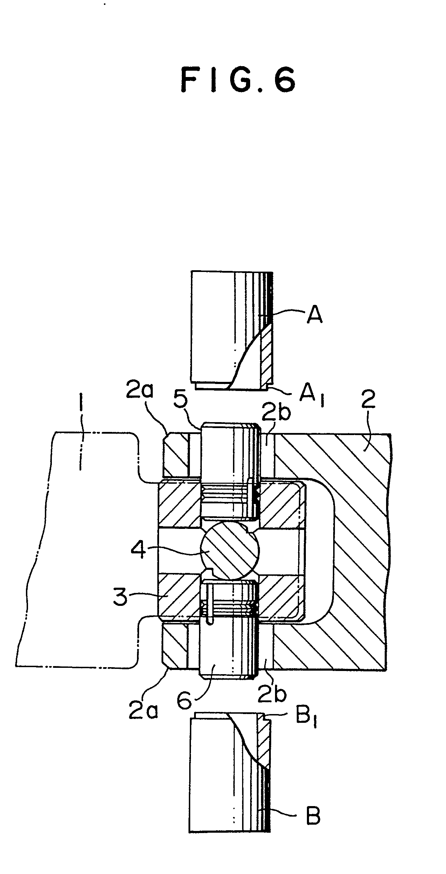

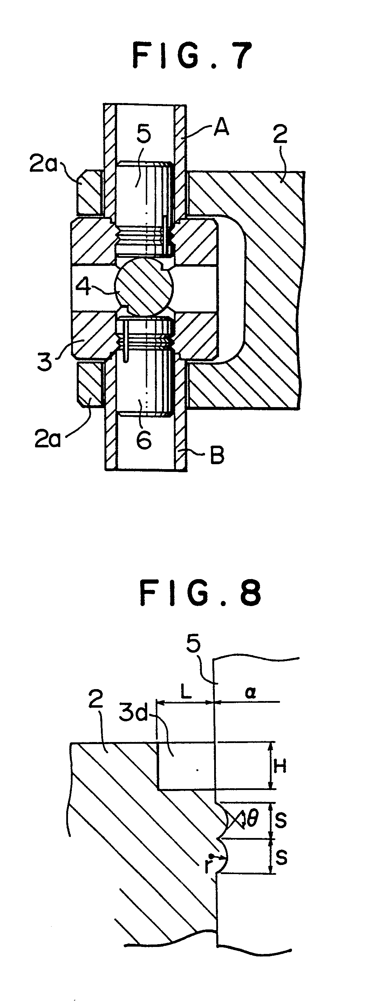

The universal joint of the invention having the described construction is assembled in a manner which will be explained hereinunder with reference to Figs. 6 and 7. As the first step, the connecting piece 3 is placed between the forks la and 2a of the first and second joint barrels 1 and 2 such that all the surfaces are covered. Then, the pivot shaft 4 is inserted into the bore 3a (see Fig. 1) through the hole lb formed in the fork la, while correctly orienting the oil groove 4a. In this state, a certain clearance is left between the wall of the hole lb and the pivot shaft 4 but the pivot shaft 4 does not come off because it closely fits in the bore 3a of the connecting piece 3. Then, the pivot shaft segments 5, 6 which are orthogonal to the pivot shaft 4 are inserted from the upper and lower sides through the holes 2b in the second joint barrel 2, such that the oil grooves 5a and 6a are aligned with the oil groove 4. In this state, the outer ends of the orthogonal pivot shafts 4 and 5, 6 are held substantially flush with the outer peripheral surfaces of respective joint barrels 1 and 2. Thus, the setting of all the parts of the universal joint is completed as shown in Fig. 6. In the next step shown in Fig. 7, the pivot shafts 4 and 5, 6 are

0160319

firmly fixed to the connecting piece 3 by the use of a pair of dies A and B. These dies A and B have an outside diameter somewhat smaller than the diameter of the hole 2b, and an inside diameter suitable just for making a sliding fit around the pivot shaft segments 5, 6. These dies are provided with annular pressing portions $A_1$ and $A_2$, respectively, formed on the inner peripheral parts thereof. These dies A and B are inserted into the holes 2b and are pressed onto the opposing surfaces of the connecting piece 3 around the pivot shaft segments 5, 6 vertically, so that the material of the connecting piece 3 is plastically deformed at the portions around thereof disposed the pivot shaft segments 5, 6 such as to cause an increase in the internal pressure. In consequence, an elastic stress greater than the yielding stress of the connecting piece is produced, which tends to cause an outward expansion. As a result, the annular anchoring grooves 4b, 4c are firmly engaged and gripped by the plastically deformed material of the connecting piece 3, so that the pivot shaft segments 5, 6 are securely held by the compacting force and shearing resistance.

Then, the assembly as a whole is turned 90° and the dies A, B are operated in the same way as explained above, thus securely fixing the other pivot shaft 4 to the connecting piece 3. After removing the dies A, B, the metal bushes 7 are inserted into the spaces which have been occupied by the dies A, B, thus completing the assembly of the universal joint.

In order to ensure the connection between the pivot shafts and the connecting piece by plastic deformation of the latter is conducted satisfactorily, the sizes of all the portions shown in Fig. 8 are preferably determined to meet the following conditions.

Assuming here that the pivot shaft is required to withstand an extracting force P of 1 ton while the $\tau$ of the material of the connecting piece is 70 $Kg/mm^2$, the axial width S of each anchoring groove, i.e., one half of the whole axial width of the double grooves, is calculated as follows:

$$(1) \qquad 2S = \frac{P}{\pi \times \alpha \times \tau} = \frac{1000}{\pi \times 8 \times 70} = 0.57$$

When the diameter $\alpha$ of the pivot shaft is 8 mm, the width S is calculated to be about 0.3 mm.

On the other hand, the radial breadth L of the pressing portion of the die is calculated as follows:

$$(2) \qquad L = 0.8 \text{ (constant)} \times 2S = 0.8 \times 0.6 = 0.48$$

Thus, the radial width L is calculated to be about 0.5 mm.

Finally, the height or depth H to which the die has to be driven is calculated as follows:

(3)     The plastic deformation cross-sectional area Vo is expressed as follows in relation to the plastic flowing cross-sectional area V' as follows:

0160319

Vo = 4 (constnat) x V' (flowing cross-sectional area)

From this formula, the following relationship is derived.

L x H = 4 (S x 1/2 S)

$$H = \frac{4 \times (5 \times 1/2\ S)}{B} = \frac{4\ (0.3 \times 1/2 \times 0.3)}{0.5}$$

= 0.36

Thus, the height or depth H is calculated to be about 0.4 mm.

In order to obtain a good balance of plastic flow of the material, the apex angle $\theta$ of the double groove is usually selected to be 90° and each groove preferably has a circularly arcuate groove bottom. In order to obtain a good compacting effect, the height or depth H is selected preferably selected such that the bottom of the recess 3d is slightly above or almost at the same level as the top of the double grooves.

The universal joint thus obtained exhibits a high resistance to vibration because the connecting piece 3 are fixed to both pivot shafts 4 and 5, 6 firmly without any play. In addition, since the connection itself is achieved by a cold plastic flow of the metallic material of the connecting piece 3, a high precision can be obtained because of elimination of any unfavourable effect which may otherwise be caused by heat during the work. In addition, the connection can be achieved with a high mass-producibility by quite a simple press work which can be conducted without substantial difficulty even by who lacks substantial experience or skill.

The pivot shafts can be fixed after they are assembled together with the connecting piece, so that the connecting piece can be held securely and with a high precision by the forks of the joint barrels without substantial play. On the other hand, the oil grooves 4a, 5a and 6a are arranged in quite a reasonable way with respect to the lubricating oil port 3c so that the metal bush 7 is lubricated smoothly. In addition, the annular recesses 3d formed by the dies effectively serve as oil wells so that lubrication is conducted in quite a stable manner.

Although in the described embodiment the joint barrel is constituted by a tubular member, this is not exclusive and the joint barrel may be constituted by a cylindrical member having a fork. It is also possible to use materials other than metals as the material of the joint barrel, provided that such materials can provide strength which is equivalent to the metals. It is also possible to have such an arrangement that both pivot shafts are composed of pairs of segments whereby these segments are inserted from all four directions until they abut at the central portion of the connecting piece. It is to be noted also that both pivot shafts need not always be contacted by each other and the arrangement may be such that segments of pivot shaft or shafts abut steps or seats formed in the bores and then

0160319

fixed by the plastic deformation of the wall of the bores
The anchoring grooves on the pivot shaft may be in the form
of serrations but the outside diameter of the projections
between adjacent grooves should not project beyond the
outside diameter of the pivot shaft.

As will be understood from the foregoing description, the invention provides a universal joint which is easy
to assemble and which operates with high reliability.

0160319

WHAT IS CLAIMED IS:

1.      A universal joint having a cross spider(10)disposed between a first joint barrel(1)and a second joint barrel (2)such as to connect said first and second joint barrels to each other for free transmission of rotation and power, wherein said cross spider(10)includes:

a connecting piece(3)having orthogonal bores(3a) and (3b)crossing each other at the center of said connecting piece(3); and

pivot shafts (4, 5, 6)received in respective bores(3a)and(3b), said pivot shafts (4, 5, 6) being provided in the peripheral surface thereof with annular engaging grooves (4b, 5b, 6b);

wherein the material of said connecting piece(3) is plastically deformed locally around said pivot shafts (4, 5, 6)received in said bores(3a)and(3b)such as to fill said engaging grooves (4b, 5b, 6b), thereby firmly fixing said pivot shafts to said connecting piece by compacting force and shearing resistance.

2.      A universal joint according to claim 1, wherein said connecting piece(3)is made of a metallic material having a deformation resistance smaller than said pivot shafts (4, 5, 6).

3.      A universal joint according to claim 1 or 2, wherein said pivot shafts (4, 5, 6)are provided with axial oil grooves (4a, 5a, 6a)which are communicated with a lubricating oil supply port(3c)formed in said connecting piece(3).

0160319

4.      A universal joint according to claim 1, wherein said pivot shafts   (4, 5, 6) include  a horizontal pivot shaft (4) extending through the bore (3a) and a vertical pivot shaft composed of segments (5 and 6) which contact with said horizontal pivot shaft at their inner ends.

5.      A universal joint according to claim 3, wherein the outlet ends of said oil grooves   (4a, 5a, 6a) are communicated with a recess (3d) formed in a surface of said connecting piece (3) by a die which is used for causing the plastic deformation of the material of said connecting piece.

6.      A universal joint according to claim 4, wherein said oil grooves   (4a, 5a, 6a) are communicated with the vacant spaces (8) formed between the end surfaces of said segments (5, 6) of said vertical pivot shaft and the peripheral surface of said horizontal pivot shaft (4).

7.      A universal joint according to claim 6, wherein said oil grooves (4a, 5a and 6b) are communicated through vacant spaces (8) on the diagonal lines.

8.      A universal joint having a first joint barrel (1), a second joint barrel (2) and a cross-spider (10) disposed between said first and second joint barrels, characterized by comprising:

        a connecting piece (3) disposed between the fingers of a fork (1a) of said first joint barrel and between the fingers of a fork (2a) of said second joint barrel;

        a first pivot shaft (4) extended through holes (1b) in said fingers of said fork (1a) and through the center of

0160319

said connecting piece and fixed to said connecting piece;

a second pivot shaft composed of a pair of segments (5, 6) which are inserted through holes (2b) formed in said fingers of said fork (2a) of said second joint barrel such as to orthogonally cross said first pivot shaft (4) after the fixing of said first pivot shaft (4); and

metal bushes (7) fitted in said holes (1b, 2b) in the fingers of said forks (1a, 2a) and around respective ends of said first pivot shaft (4) and ends of said segments (5, 6);

said first and second pivot shafts (4, 5, 6) being provided with annular anchoring grooves (4b, 5b, 6b) formed in the peripheral surfaces thereof, the material of said connecting piece (3) being plastically deformed locally around said first and second pivot shafts (4, 5, 6) received in the bores (3a and 3b) in said connecting piece (3), such as to fill said anchoring grooves (4b, 5b, 6b) thereby firmly fixing said first and second pivot shafts by compacting force and shearing resistance.

FIG.1

FIG.2

# F I G . 3

# F I G . 4

0160319

# FIG.5

0160319

# FIG.6

0160319

# F I G . 7

# F I G . 8